# EUROPÄISCHE PATENTSCHRIFT

(11) **EP 3 645 137 B1**
(45) Veröffentlichungstag und Bekanntmachung des Hinweises auf die Patenterteilung: **21.07.2021**
(21) Anmeldenummer: 18750150.7
(22) Anmeldetag: 31.07.2018
(51) Int. Cl.: B01D 3/08

(54) **ROTATIONSVERDAMPFER**
ROTARY EVAPORATOR
ÉVAPORATEUR ROTATIF

(30) Priorität: 01.08.2017 DE 202017004053 U
(43) Veröffentlichungstag der Anmeldung: 06.05.2020
(73) Patentinhaber: Hans Heidolph GmbH, 93309 Kelheim (DE)
(72) Erfinder: LÖSCHEL, Robert, 91126 Schwabach (DE); HEUBERGER, Sven, 90451 Nürnberg (DE)
(74) Vertreter: Prüfer & Partner mbB Patentanwälte · Rechtsanwälte
(86) Internationale Anmeldenummer: PCT/EP2018/070774
(87) Internationale Veröffentlichungsnummer: WO 2019/025458

(56) Entgegenhaltungen:
- EP-A1- 2 606 949
- DE-A1- 3 522 607
- DE-A1- 3 526 644
- DE-C1- 4 405 717
- US-A1- 2009 165 653

## Beschreibung

Die vorliegende Erfindung bezieht sich auf einen Rotationsverdampfer zum Verdampfen eines in einem Ausgangsstoff enthaltenen Stoffes.

Ein Rotationsverdampfer umfasst einen Rotationskolben zur Aufnahme eines Ausgangsstoffes, welcher den zu verdampfenden Stoff enthält. Durch Erwärmen des Rotationskolbens in einem Heizbad wird dieser erhitzt und der zu verdampfende Stoff in die dampfförmige Phase überführt. Der Dampf gelangt durch eine Dampfdurchführung in einen Kondensator, wo er abkühlt und kondensiert. Das so entstehende Destillat wird dann aus einem Auffangbehälter entnommen.

Ein derartiger Rotationsverdampfer ist beispielsweise aus der Druckschrift DE 44 05 717 C1 bekannt. Zur Entnahme des Destillats sind ein Überdruckventil und ein Überdruckerzeuger, der den Druck in dem Destillat erhöht, vorgesehen. Bei einem hinreichenden Überdruck des Destillats öffnet sich das Überdruckventil und gibt Destillat an einen Lagerbehälter ab.

Nachteilig dabei ist, dass zur Destillatentnahme ein Druck in dem Destillat selbst erzeugt wird. Dadurch kann es zu einer Verunreinigung oder zu einer Beeinflussung physikalischer Eigenschaften des Destillats kommen. Zudem erfolgt die Entnahme des Destillats erst bei einem hinreichenden Überdruck, wodurch Reste des Destillats in dem Auffangbehälter verbleiben können.

Das Dokument DE 35 22 607 A1 beschreibt einen Rotationsverdampfer mit einem Rotationskolben, einem Kühler und einem Destillatauffanggefäß. Gemäß einer Ausführungsform ist ein Füll- und Entnahmeschlauch in den Rotationskolben hinein geführt und steht in Verbindung mit einem Tank für die zu verarbeitende Ware und mit einem Tank für das Konzentrat. In einem Verfahren zur Vakuumsrotationsverdampfung, welches mit dem Rotationsverdampfer durchführbar ist, wird automatisiert eine Messung des Rotationskolbenmasseninhaltes oder des Rotationskolbenvolumeninhaltes durchgeführt und Veränderungen dieser Rotationskolbeninhalte werden geregelt.

Das Dokument US 2009/0165653 A1 beschreibt einen Rotationsverdampfer mit einem Verdampfungskolben, einem Kondensator und mehreren Aufnahmebehältern für das Destillat, das Konzentrat und einen Ausgangsstoff, welche über Leitungen jeweils mit dem Verdampfungskoben verbunden sind. Im Betrieb des Rotationsverdampfers wird der Verdampfungskolben durch Zuführen des Ausgangsstoffes aus dem entsprechenden Behälter befüllt, und nach dem Verdampfungsvorgang werden das Destillat und das Konzentrat den entsprechenden Behältern zugeführt.

Die Aufgabe der vorliegenden Erfindung besteht daher darin, einen Rotationsverdampfer bereitzustellen, bei dem eine Entnahme des Destillats bzw. von Rückständen des Ausgangsstoffes auf einfache Art und Weise möglich ist und/oder dessen Reinigung auf einfache Art und Weise möglich ist.

Diese Aufgabe wird gelöst durch einen Rotationsverdampfer gemäß Anspruch 1 und ein Verfahren zum Verdampfen eines in einem Ausgangsstoff enthaltenen Stoffes gemäß Anspruch 9. Weiterbildungen der Erfindung sind in den Unteransprüchen angegeben. Dabei kann das Verfahren auch durch die untenstehenden bzw. in den Unteransprüchen ausgeführten Merkmale des Rotationsverdampfers weitergebildet sein oder umgekehrt.

Ein Rotationsverdampfer gemäß einem ersten Aspekt der Erfindung ist geeignet zum Verdampfen eines in einem Ausgangsstoff enthaltenen Stoffes und umfasst einen Verdampfungskolben zur Aufnahme des Ausgangsstoffes, eine Einrichtung zum Erhitzen des Stoffes, einen Kondensator zum Kondensieren des verdampften Stoffes, einen Sammelbehälter zur Aufnahme des wiederverflüssigten Stoffes und zumindest eine Einrichtung zum Erzeugen eines Unterdruckes und/oder Überdruckes. Zum Zweck der Entnahme des wiederverflüssigten Stoffes ist zumindest in dem Sammelbehälter ein Überdruck herstellbar und/oder zum Zweck der Entnahme von Rückständen des Ausgangsstoffes ist zumindest in dem Verdampfungskolben ein Überdruck herstellbar.

Unter dem Begriff "Stoff" sind hierbei sowohl Reinstoffe als auch Gemische zu verstehen, welche in flüssiger und/oder fester Phase vorliegen können. Der verdampfte Stoff kann alle oder nur eine bzw. mehrere Komponenten des Ausgangsstoffes umfassen und liegt nach dem Verdampfen in gasförmiger Phase vor. Er wird im Folgenden auch als Destillat bezeichnet.

Mit dem Begriff "Überdruck" ist dabei gemeint, dass in dem entsprechenden Behälter ein Druck herrscht der höher ist als der Druck in einem externen Raum, in den das Destillat bzw. Rückstände des Ausgangsstoffes abgegeben werden. Dieser externe Raum kann beispielsweise ein weiterer abgeschlossener Behälter mit einem definierten Druck sein oder ein offener Behälter, in welchem der Atmosphärendruck herrscht.

Mit einem derartigen Rotationsverdampfer ist es beispielsweise möglich, das Destillat bzw. einen nicht verdampften Rest des Ausgangsstoffes auf einfache Art und Weise aus dem entsprechenden Behälter zu entnehmen. Dabei wird ein Überdruck in dem Behälter erzeugt, welcher den Stoff aus dem Behälter verdrängt. Somit wird kein Druck in dem Stoff selber erzeugt.

Vorzugsweise ist zum Zweck der Zudosierung des Ausgangsstoffes zumindest in dem Verdampfungskolben ein Unterdruck herstellbar. Mit dem Begriff "Unterdruck" ist dabei gemeint, dass in dem Verdampfungskolben ein kleinerer Druck bis hin zu einem Vakuum herrscht als der Druck in einem externen Raum, aus dem der Ausgangsstoff zugeführt wird. Dieser externe Raum kann beispielsweise ein weiterer abgeschlossener Behälter mit einem definierten Druck sein oder ein offener Behälter, in welchem der Atmosphärendruck herrscht. Durch eine derartige Zudosierung des Ausgangsstoffes mittels Unterdruck ist beispielsweise ein Einbringen des Ausgangsstoffes in den Verdampfungskolben auf einfache Art und Weise möglich, da durch den Unterdruck der Ausgangsstoff in den Verdampfungskolben eingesaugt wird.

Zumindest der Verdampfungskolben, der Kondensator und der Sammelbehälter bilden vorzugsweise ein im Wesentlichen gasdicht abgeschlossenes System in welchem vorzugsweise mittels der Einrichtung zum Erzeugen eines Unterdruckes und/oder Überdruckes ein Druck einstellbar ist. Damit kann beispielsweise der Unter- und/oder Überdruck auf einfache Art und Weise erzeugt werden. Da der Destillationsvorgang in einem Rotationsverdampfer meist unter Unterdruck erfolgt ist die Erzeugung eines Unter- bzw. Überdrucks in dem Verdampfungskolben und/oder Sammelbehälter beispielsweise durch Verwendung bereits vorhandener Einrichtungen möglich, so dass keine aufwändigen und/oder kostspieligen Modifikationen des Rotationsverdampfers notwendig sind.

Weiter umfasst der Rotationsverdampfer vorzugsweise eine erste Leitung zur Zudosierung des Ausgangsstoffes und/oder eine zweite Leitung zur Entnahme des wiederverflüssigten Stoffes und/oder eine dritte Leitung zur Entnahme des Ausgangsstoffes, wobei die erste, zweite und dritte Leitung eine erste bzw. eine zweite bzw. eine dritte Absperreinrichtung aufweisen, so dass zur Zudosierung des Ausgangsstoffes die zweite und die dritte Leitung durch die zweite bzw. die dritte Absperreinrichtung absperrbar sind und/oder zur Entnahme des wiederverflüssigten Stoffes die erste und die dritte Leitung durch die erste bzw. die dritte Absperreinrichtung absperrbar sind und/oder zur Entnahme des Ausgangsstoffes die erste und die zweite Leitung durch die erste bzw. zweite Absperreinrichtung absperrbar sind.. Dadurch können beispielsweise die einzelnen Entnahmeprozesse und/oder die Zudosierung separat voneinander erfolgen.

Vorzugsweise ist der Ausgangsstoff ein Stoffgemisch aus verschiedenen Komponenten und zur Zudosierung des Ausgangsstoffes sind vorzugsweise zumindest zwei erste Leitungsabschnitte vorgesehen, wobei zur Dosierung verschiedener Komponenten des Ausgangsstoffes vorzugsweise Absperreinrichtungen an und/oder zwischen den Leitungsabschnitten vorgesehene sind. Dadurch können die Komponenten des Ausgangsstoffes beispielsweise separat dosiert in den Verdampfungskolben eingebracht werden, so dass das Stoffgemisch in dem Kolben selbst hergestellt, d.h. innerhalb des Kolbens gemischt wird. Das separate Einbringen der einzelnen Komponenten kann dabei zeitlich nacheinander oder gleichzeitig erfolgen. Die Dosiermenge ist dabei beispielsweise durch den Volumenstrom der einzelnen Komponenten und die Zeitdauer des Durchflusses bestimmt. Die Dosiermenge kann beispielsweise durch die Absperreinrichtungen gesteuert sein.

Vorzugsweise ist zumindest eine Absperreinrichtung manuell und/oder automatisch bedienbar und/oder zur Dosierung der Menge des durchströmenden Stoffes geeignet. Damit ist es beispielsweise möglich die Menge an einzubringenden Ausgangsstoff festzulegen. Auch ist es beispielsweise möglich eine automatische Entnahme des Destillats und/oder Ausgangsstoffes und/oder eine automatische Zudosierung zu realisieren. Hierzu können beispielsweise Sensoren in den entsprechenden Behältern und/oder Leitungen vorgesehen sein.

Der Ausgangsstoff ist vorzugsweise ein Stoffgemisch aus zumindest zwei Komponenten, wobei eine Komponente in flüssiger oder gasförmiger oder fester Phase vorliegt. Ein derartiges Stoffgemisch, insbesondere wenn die Komponenten verschiedene Phasen aufweisen, kann beispielsweise wie oben beschrieben in einem derartigen Rotationsverdampfer auf einfache Art und Weise in dem Verdampfungskolben gemischt werden und muss nicht bereits als fertige Mischung vorliegen. Insbesondere können hierbei beispielsweise Feststoffe wie z.B. ein Pulver mit Flüssigkeiten wie z.B. einem Lösungsmittel gemischt werden. Auch ist es dabei beispielweise möglich ein Gas in eine Flüssigkeit als Ausgangsstoff einzuleiten.

Vorzugsweise sind in dem Rotationsverdampfer zumindest zwei Destillatentnahmebehälter und/oder zumindest zwei zweite Leitungsabschnitte vorgesehen zur Entnahme zumindest zweier verschiedener Komponenten des wiederverflüssigten Stoffes. Dadurch ist es beispielsweise möglich, verschiedene Fraktionen des Destillats separat zu entnehmen.

Die erste Leitung und/oder ein erster Leitungsabschnitt zum Zudosieren des Ausgangsstoffes ist zumindest zeitweise mit einem Destillatentnahmebehälter verbunden. Damit ist es beispielsweise möglich, eine Mehrfachdestillation auf einfache Art und Weise und/oder zumindest teilweise automatisch durchzuführen. Vorzugsweise ist der Rotationsverdampfer mit zumindest einem Vorratsbehälter verbunden zum Bevorraten zumindest einer Komponente des Ausgangsstoffes, sowie mit einer Dosiereinrichtung, vorzugsweise einer Peristaltikpumpe, zum Zuführen einer vorherbestimmten Menge der zumindest einen Komponente des Ausgangsstoffes aus dem Vorratsbehälter in einen Dosierbehälter. Damit kann beispielsweise die Menge des dem Verdampfungskolbens zuzuführenden Ausgangsstoffes bzw. der einzelnen Ausgangsstoffkomponenten vorgegeben werden. Der Vorratsbehälter und die Dosiereinrichtung können auch Bestandteil des Rotationsverdampfers sein.

Ferner ist vorzugsweise eine Steuereinheit für einen oben beschriebenen Rotationsverdampfer vorgesehen, wobei die Steuereinheit ausgebildet und/oder programmiert ist, Absperreinrichtungen des Rotationsverdampfers und/oder die Einrichtung zum Erzeugen eines Unterdruckes und/oder Überdruckes zu steuern um ein automatisches Zudosieren des Ausgangsstoffes und/oder eine automatische Entnahme von Rückständen des Ausgangsstoffes und/oder eine automatische Entnahme des wiederverflüssigten Stoffes zu erlauben. Damit kann beispielsweise eine zumindest teilweise automatische Destillation durchgeführt werden.

Ein Rotationsverdampfer gemäß einem weiteren Aspekt der Erfindung ist geeignet zum Verdampfen eines in einem Ausgangsstoff enthaltenen Stoffes und umfasst einen Verdampfungskolben zur Aufnahme des Ausgangsstoffes, eine Einrichtung zum Erhitzen des Stoffes, einen Kondensator zum Kondensieren des verdampften Stoffes, einen optionalen Sammelbehälter zur Aufnahme des wiederverflüssigten Stoffes und zumindest eine Einrichtung zum Erzeugen eines Unterdruckes und/oder Überdruckes. Zum Zweck der Entnahme eines Reinigungsmittels, insbesondere eines flüssigen Reinigungsmittels, ist zumindest in dem Verdampfungskolben und/oder dem Kondensator ein Überdruck herstellbar.

Mit einem derartigen Rotationsverdampfer ist es beispielsweise möglich, ein Reinigungsmittel auf einfache Art und Weise aus dem Verdampfungskolben und/oder dem Kondensator zu entnehmen. Dabei wird ein Überdruck in dem Verdampfungskolben und/oder dem Kondensator erzeugt, welcher das Reinigungsmittel aus dem Behälter, d. h. dem Verdampfungskolben und/oder dem Kondensator, verdrängt. Insbesondere ist dadurch beispielsweise eine Entnahme eines Reinigungsmittels ohne eine weitere, separat von dem Rotationsverdampfer bereitgestellte Reinigungseinrichtung, beispielsweise eine externe Pumpe zum Absaugen des Reinigungsmittels aus dem Verdampfungskolben und/oder dem Kondensator des Rotationsverdampfers, möglich.

Vorzugsweise ist zum Zweck des Zuführens des Reinigungsmittels zumindest in dem Verdampfungskolben und/oder dem Kondensator ein Unterdruck herstellbar. Durch eine derartige Zuführung des Reinigungsmittels mittels Unterdruck ist beispielsweise ein Einbringen des Reinigungsmittels in den Verdampfungskolben auf einfache Art und Weise möglich, da durch den Unterdruck das Reinigungsmittel in den Verdampfungskolben bzw. den Kondensator eingesaugt wird. Insbesondere ist es dadurch beispielsweise auf einfache Art und Weise möglich, ein Reinigungsmittel zum Reinigen des Rotationsverdampfers mittels Unterdruck einzubringen (z. B. aus einem bereitgestellten Reinigungsmittelvorrat) und mittels Überdruck wieder zu entnehmen (und z. B. einem Reinigungsmittelentnahmebehälter zuzuführen), und so eine Reinigung des Rotationsverdampfers im Wesentlichen ohne zusätzliche Mittel, d. h. insbesondere ohne eine separat bereitgestellte Pumpe und/oder weitere Druckerzeugungsmittel, durchzuführen (mit Ausnahme eventuell bereitgestellter Behälter für das Reinigungsmittel und/oder Zu- oder Ableitungen für das Reinigungsmittel).

Erfindungsgemäß wird ein erstes Verfahren bereitgestellt zum Verdampfen eines in einem Ausgangsstoff enthaltenen Stoffes mittels eines Rotationsverdampfers. Der Rotationsverdampfer umfasst einen Verdampfungskolben zur Aufnahme des Ausgangsstoffes, eine Einrichtung zum Erhitzen des Stoffes, einen Kondensator zum Kondensieren des verdampften Stoffes, einen Sammelbehälter zur Aufnahme des wiederverflüssigten Stoffes und zumindest eine Einrichtung zum Erzeugen eines Unterdruckes und/oder Überdruckes. Dabei wird zum Zweck der Entnahme des wiederverflüssigten Stoffes zumindest in dem Sammelbehälter ein Überdruck hergestellt und/oder zur Entnahme von Rückständen des Ausgangsstoffes zumindest in dem Verdampfungskolben ein Überdruck hegestellt. Mit einem derartigen Verfahren ist es beispielsweise möglich, das Destillat bzw. einen nicht verdampften Rest des Ausgangsstoffes auf einfache Art und Weise aus dem entsprechenden Behälter zu entnehmen. Dabei wird ein Überdruck in dem Behälter erzeugt, welcher den Stoff aus dem Behälter verdrängt. Somit wird kein Überdruck in dem Stoff selber erzeugt.

Insbesondere durch die Möglichkeit Stoffgemische durch separates Einbringen der Komponenten in den Verdampfungskolben zu erzeugen ergeben sich vielfältige Einsatzmöglichkeiten eines derartigen Rotationsverdampfers, wie beispielsweise zur Medikamentenherstellung, zur Herstellung von Schlämmen in der Keramikherstellung oder zur Pulverherstellung, beispielsweise für den Einsatz in Spritzgussverfahren.

Erfindungsgemäß wird ein weiteres Verfahren bereitgestellt, das dem Reinigen eines Rotationsverdampfers dient, d. h. ein Reinigungsverfahren für einen Rotationsverdampfer. Der Rotationsverdampfer umfasst einen Verdampfungskolben zur Aufnahme des Ausgangsstoffes, eine Einrichtung zum Erhitzen des Stoffes, einen Kondensator zum Kondensieren des verdampften Stoffes, einen optionalen Sammelbehälter zur Aufnahme des wiederverflüssigten Stoffes und zumindest eine Einrichtung zum Erzeugen eines Unterdruckes und/oder Überdruckes. Dabei wird zum Zweck der Entnahme eines Reinigungsmittels zumindest in dem Verdampfungskolben und/oder in dem Kondensator ein Überdruck hegestellt. Mit einem derartigen Verfahren ist es beispielsweise möglich, das Reinigungsmittel auf einfache Art und Weise aus dem Verdampfungskolben und/oder in dem Kondensator zu entnehmen. Dabei wird ein Überdruck in dem Behälter (d. h. dem Verdampfungskolben und/oder dem Kondensator) erzeugt, welcher das Reinigungsmittel aus dem Behälter verdrängt. Insbesondere ist dadurch beispielsweise eine Entnahme eines Reinigungsmittels ohne eine weitere, separat von dem Rotationsverdampfer bereitgestellte Reinigungseinrichtung, beispielsweise eine externe Pumpe zum Absaugen des Reinigungsmittels aus dem Verdampfungskolben und/oder dem Kondensator des Rotationsverdampfers, möglich.

Vorzugsweise wird zum Zuführen des Reinigungsmittels zumindest in dem Verdampfungskolben und/oder dem Kondensator ein Unterdruck erzeugt. Dadurch ist beispielsweise ein Einbringen des Reinigungsmittels in den Verdampfungskolben auf einfache Art und Weise möglich, da durch den Unterdruck das Reinigungsmittel in den Verdampfungskolben bzw. den Kondensator eingesaugt wird.

Weitere Merkmale und Zweckmäßigkeiten der Erfindung ergeben sich aus der Beschreibung von Ausführungsbeispielen anhand der beigefügten Zeichnungen.
- Fig. 1: zeigt eine schematische Darstellung einer Ausführungsform eines Rotationsverdampfers gemäß der vorliegenden Erfindung.
- Fig. 2a: zeigt schematisch eine Anordnung zum Zudosieren mehrere Komponenten eines Ausgangsstoffes.
- Fig. 2b: zeigt eine Weiterbildung der in Fig. 2a gezeigten Anordnung.
- Fig. 3: zeigt eine schematische Anordnung zur Entnahme verschiedener Komponenten eines Destillats.

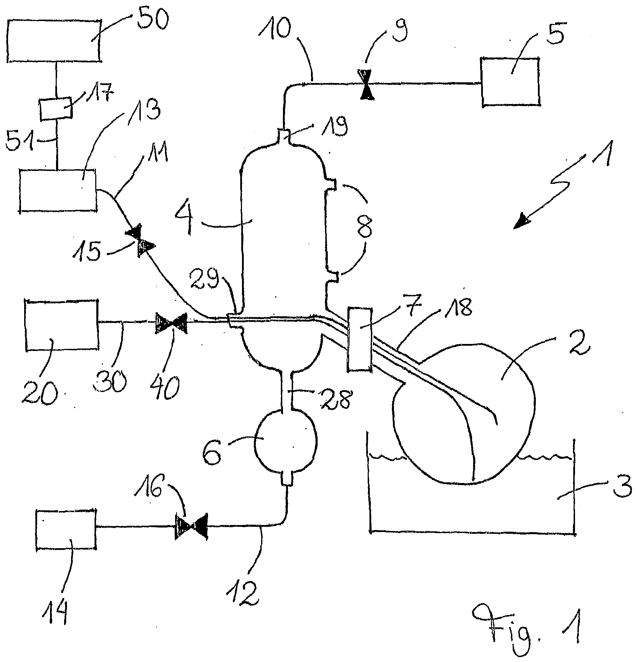

Im Folgenden wird mit Bezug auf Fig. 1 eine Ausführungsform eines Rotationsverdampfers 1 gemäß der vorliegenden Erfindung beschrieben.

Der Rotationsverdampfer 1 umfasst einen in einem Heizbad 3 angeordneten und mittels eines Rotationsantriebs 7 um eine Rotationsachse drehbaren Verdampfungskolben 2 zur Aufnahme eines Ausgangsstoffes. Der Verdampfungskolben 2 steht über eine Zuführleitung 11 in Verbindung mit einem den Ausgangsstoff enthaltenen Behälter 13. Optional kann dieser Behälter 13 über eine Leitung 51, welche eine Peristaltikpumpe 17 aufweist, mit einem Vorratsbehälter 50 in Verbindung stehen. Über eine Entnahmeleitung 30 steht der Verdampfungskolben 2 in Verbindung mit einem Restebehälter 20. Ein Dampfweg ist aus einer Dampfdurchführung 18 durch den Rotationsantrieb 7 und einem Kondensator 4 gebildet. Unter dem Kondensator ist ein Sammelbehälter 6 zur Aufnahme von verflüssigtem Destillat vorgesehen, welcher über eine Destillatleitung 12 in Verbindung mit einem Destillatentnahmebehälter 14 steht. An dem Kondensator ist ein Kompressor 5 angeschlossen.

Der Verdampfungskolben 2 kann beispielsweise als ein Rundkolben aus Glas ausgestaltet sein. Das Heizbad 3 mit einer beheizbaren Flüssigkeit, beispielsweise Wasser, ist unterhalb des Verdampfungskolbens 2 angeordnet. Über einen in Fig. 1 nicht gezeigten Vertikalantrieb ist die Eintauchtiefe des Verdampfungskolbens 2 in der Flüssigkeit des Heizbades 3 einstellbar. Der Ausgangsstoff kann ein Reinstoff oder auch ein Gemisch sein und liegt in flüssiger und/oder fester Phase in dem Verdampfungskolben 2 vor und enthält den zu verdampfenden Stoff. Die Zuführleitung 11 zum Zudosieren des Ausgangsstoffes verbindet den Verdampfungskolben 2 mit dem Behälter 13 und weist eine Absperreinrichtung in Form eines Ventils 15 auf. Das Ventil 15 ist dazu ausgebildet, die Zuführleitung 11 freizugeben, so dass ein Stoffaustausch zwischen Behälter 13 und Verdampfungskolben 2 möglich ist, und die Zuführleitung 11 abzusperren, so dass kein Stoffaustausch erfolgt. Das Ventil 15 kann elektrisch, magnetisch, pneumatisch, hydraulisch, mechanisch und/oder manuell betätigbar sein. Optional kann das Ventil ferner zum Einstellen des durch die Zuführleitung 11 geleiteten Volumenstroms geeignet sein. Eine weitere Leitung 51 verbindet den Vorratsbehälter 50 mit dem Behälter 13 und weist eine Dosiereinrichtung in Form einer Peristaltikpumpe 17 auf. Die Entnahmeleitung 30 zur Entnahme von Resten und/oder Rückständen des Ausgangsstoffes verbindet den Verdampfungskolben 2 mit dem Restebehälter 20 und weist eine Absperreinrichtung in Form eines Ventils 40 auf. Das Ventil 40 ist dazu ausgebildet, die Entnahmeleitung 30 freizugeben, so dass ein Stoffaustausch zwischen dem Verdampfungskolben 2 und dem Restebehälter 20 möglich ist, und die Entnahmeleitung 30 abzusperren, so dass kein Stoffaustausch erfolgt. Das Ventil 40 kann elektrisch, magnetisch, pneumatisch, hydraulisch, mechanisch und/oder manuell betätigbar sein. Die Entnahmeleitung 30 ist dabei vorzugsweise im Wesentlichen bis auf den Boden, d.h. die tiefste Stelle, des Verdampfungskolbens 2 geführt. Dadurch ist es möglich, einen überwiegenden Teil der Ausgangsstoffrückstände, vorzugsweise die gesamten Ausgangsstoffrückstände, aus dem Verdampfungskolben 2 zu entnehmen, so dass der Verdampfungskolben im Wesentlichen vollständig entleerbar ist.

Der Kondensator 4 weist Kühlmittelanschlüsse 8 auf zum Zu- und Ableiten eines Kühlmittels sowie einen Unterdruckanschluss 19, welcher über eine Leitung 10 und ein Ventil 9 mit einem Kompressor 5 verbunden ist. Der Kompressor 5 ist geeignet zum Erzeugen eines Überdrucks und zum Erzeugen eines Unterdrucks bis hin zu einem Vakuum. Weiter weist der Kondensator 4 eine Durchführung 29 für die Zuführleitung 11 und die Entnahmeleitung 30 auf. Es können auch zwei separate Durchführungen für die Leitungen 11 und 30 vorgesehen sein. Der Destillatsammelbehälter 6 ist unter dem Kondensator 4 angeordnet und über einen Destillatauslass 28 mit diesem verbunden. Eine Destillatleitung 12 mit einem Ventil 16 verbindet den Destillatsammelbehälter 6 mit dem Destillatentnahmebehälter 14. Das Ventil 16 ist dazu ausgebildet, die Destillatleitung 12 freizugeben, so dass ein Stoffaustausch zwischen dem Sammelbehälter 6 und dem Destillatentnahmebehälter 14 möglich ist, und die Destillatleitung 12 abzusperren, so dass kein Stoffaustausch erfolgt. Das Ventil 16 kann elektrisch, magnetisch, pneumatisch, hydraulisch, mechanisch und/oder manuell betätigbar sein. Optional kann es zum Einstellen des durch die Destillatleitung 12 geleiteten Volumenstroms geeignet sein.

Der Verdampfungskolben 2, der Kondensator 4 und der Sammelbehälter 6 bilden dabei vorzugsweise mit den in dem Dampfweg zwischen ihnen angeordneten Elementen ein gasdicht abgeschlossenes System.

Weiter umfasst der Rotationsverdampfer eine in Fig. 1 nicht gezeigte Bedieneinheit zur Steuerung des Rotationsantriebes 7, des Heizbades 3, des Kompressors 5, des Vertikalantriebes und der Ventile 9, 15, 16, 40 sowie der Peristaltikpumpe 17. Insbesondere die Ventile 9, 15, 16, 40 und die Peristaltikpumpe 17 können dabei auch in koordinierter Weise über eine Steuereinheit (in Fig. 1 nicht gezeigt) gesteuert sein.

Im Betrieb wird zunächst der Verdampfungskolben befüllt. Hierzu wird mittels der Peristaltikpumpe 17 dem Behälter 13 aus dem Vorratsbehälter 50 durch die Leitung 51 eine definierte Menge an Ausgangsstoff zugeführt. Das Ventil 16 für die Destillatentnahme und das Ventil 40 für die Entnahme von Ausgangsstoffrückständen werden geschlossen, so dass die Destillatleitung 12 und die Entnahmeleitung 30 abgesperrt sind. Dann wird mittels des Kompressors 5 in dem abgeschlossenen System aus Verdampfungskolben 2, Kondensator 4 und Sammelbehälter 6 ein Unterdruck bis hin zu einem Vakuum erzeugt und das Ventil 15 geöffnet. Der Unterdruck saugt den Ausgangsstoff aus dem Behälter 13 durch die Zuführleitung 11 in den Verdampfungskolben 2. Nach dem Befüllen des Verdampfungskolbens wird das Ventil 15 geschlossen und riegelt so die Zuführleitung 11 ab.

Dann wird der Verdampfungskolben 2 durch den Rotationsantrieb 7 in Drehung versetzt. Durch Eintauchen in das Heizbad 3 und/oder Anlegen eines Unterdrucks, durch den die Siedetemperatur des Destillats verringert werden kann, wird das Destillat aus dem Ausgangsstoff verdampft. Durch die Rotation des Verdampfungskolbens 2 wird auf dessen Innenseite ein dünner Film, beispielsweise ein Flüssigkeitsfilm, des Ausgangsstoffes erzeugt, so dass die Oberfläche des Ausgangsstoffes vergrößert und die Verdampfung beschleunigt ist. Über die Dampfdurchführung 18 gelangt das verdampfte Destillat in den Kondensator 4, wo es gekühlt wird und kondensiert. Das verflüssigte Destillat fließt durch den Auslass 28 in den Sammelbehälter 6.

Zur Entnahme des Destillats aus dem Sammelbehälter 6 wird nun mittels des Kompressors 5 ein Überdruck in dem Sammelbehälter 6 erzeugt. Dann wird das Ventil 16 geöffnet, so dass das verflüssigte Destillat durch den Überdruck aus dem Sammelbehälter verdrängt wird und durch die Destillatleitung 12 in den Destillatentnahmebehälter 14 gelangt. Durch Öffnen des Ventils 40 können zudem nicht verdampfte Reste und/oder Rückstände des Ausgangsstoffes aus dem Verdampfungskolben 2 entfernt werden. Da der Überdruck auch in dem Verdampfungskolben 2 herrscht, werden Reste des Ausgangsstoffes aus diesem verdrängt und gelangen durch die Entnahmeleitung 30 in den Restebehälter 20. Die Destillatentnahme und die Entnahme von Ausgangsstoffresten können dabei durch geeignetes Öffnen und Schließen der Ventile 40, 16 gleichzeitig oder nacheinander erfolgen und werden vorzugsweise so lange durchgeführt, bis im Wesentlichen kein Destillat in dem Sammelbehälter 6 bzw. Rückstände in dem Verdampfungskolben 2 mehr vorhanden sind.

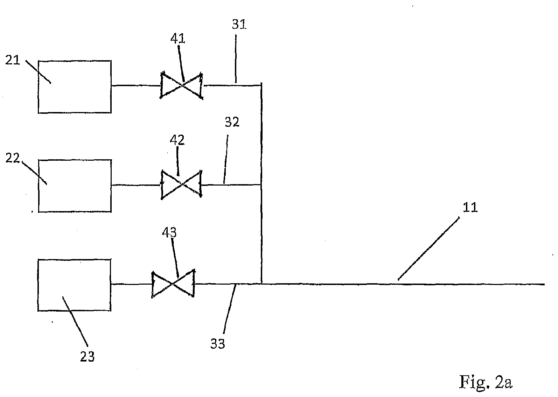

Wie in Fig. 2a gezeigt kann der Verdampfungskolben 2 auch mit mehreren Behältern 21, 22 und 23 für Komponenten des Ausgangsstoffes in Verbindung stehen. Hierzu steht jeder der Behälter 21, 22 und 23 über einen separaten Leitungsabschnitt 31, 32 bzw. 33 über die gemeinsame Zuführleitung 11 mit dem Verdampfungskolben 2 in Verbindung, so dass ein flüssiger und/oder fester und/oder gasförmiger Stoff durch die Leitungen gelangen kann. Weiter enthält jeder Leitungsabschnitt 31, 32 und 33 ein Ventil 41, 42 bzw. 43.

Die Behälter 21, 22 und 23 enthalten jeweils eine Komponente des Ausgangsstoffes. Die Ausgangsstoffkomponenten können Reinstoffe oder auch ein Gemische sein und liegen in flüssiger und/oder fester und/oder gasförmiger Phase in dem entsprechenden Behälter vor. So enthält der Behälter 21 beispielsweise ein erstes Pulver, Behälter 22 ein zweites Pulver und Behälter 23 ein Lösungsmittel. Die Absperreinrichtungen in Form von Ventilen 41, 42 und 43 sind dazu ausgebildet, die Leitungsabschnitte 31, 32 bzw. 33 freizugeben, so dass ein Stoffaustausch zwischen dem Verdampfungskolben 2 und dem entsprechenden Behälter 21, 22 bzw. 23 möglich ist, und die Leitungsabschnitte 31, 32 bzw. 33 abzusperren, so dass kein Stoffaustausch erfolgt. Die Ventile 41, 42 und 43 können elektrisch, magnetisch, pneumatisch, hydraulisch, mechanisch und/oder manuell betätigbar sein. Vorzugsweise sie zum Einstellen des durch den entsprechenden Leitungsabschnitt geleiteten Volumenstroms geeignet. Optional können die Behälter 21, 22, 23 analog zu dem Behälter 13 über weitere Leitungen und Dosiereinrichtungen wie beispielsweise Peristaltikpumpen mit Vorratsbehältern für die Ausgangsstoffkomponenten in Verbindung stehen.

Zum Befüllen des Verdampfungskolbens 2 wird wie oben beschrieben ein Unterdruck in diesem erzeugt. Das Ventil 40 der mit dem Restebehälters 20 verbundenen Entnahmeleitung 30 sowie das Ventil 16 der Destillatleitung 12 sind dabei geschlossen. Durch koordiniertes Öffnen und Schließen der Ventile 41, 42 und 43 wird nun ein Zudosieren des gewünschten Ausgangsstoffes in den Verdampfungskolben bewirkt, wobei die verschiedenen Komponenten durch den Unterdruck aus den entsprechenden Behältern 21, 22 und 23 über die Leitungsabschnitte 31, 32 und 33 in die Zuführleitung 11 und dann in den Verdampfungskolben 2 gelangen. Die Mengen der aus den Behältern 21, 22 und 23 zudosierten Komponenten des Ausgangsstoffes werden dabei dadurch gesteuert, dass die entsprechenden Ventile 41, 42 und 43 nach einer festgelegten Zeitspanne wieder geschlossen werden und/oder die Ventile festgelegte Mengen der Komponenten durch die Leitungsabschnitte 31, 32 und 33 und somit durch die Zuführleitung 11 hindurchlassen. Optional kann die jeweilige Menge der zudosierten Ausgangsstoffkomponente auch durch die in dem entsprechenden Behälter 21, 22, 23 enthaltene Menge der Ausgangsstoffkomponente festgelegt sein. Die zudosierte Menge der jeweiligen Komponente ist dabei durch die zu erzielende Zusammensetzung und Gesamtmenge des Ausgangsstoffes bestimmt. Die Zudosierung der einzelnen Komponenten in den Verdampfungskolben kann dabei zumindest zeitweise nacheinander oder gleichzeitig erfolgen. Die gewünschte Ausgangsstoffzusammensetzung wird somit durch Mischen der Ausgangsstoffkomponenten aus den Behältern 21, 22 und 23 erhalten, wobei die Komponenten in dem Verdampfungskolben auch chemische und/oder physikalische Reaktionen miteinander eingehen können.

Optional können die Komponenten während oder nach dem Zudosieren in dem Verdampfungskolben noch zusätzlich miteinander vermischt werden, beispielsweise durch Rotation und/oder Schütteln des Verdampfungskolbens und/oder mittels einer weiteren in dem Verdampfungskolben angeordneten Mischeinrichtung. Der Mischung kann auch zusätzlich Wärmeenergie zugeführt werden, beispielsweise durch Erhöhen der Temperatur des Heizbades, so dass beispielsweise chemische Reaktionen oder Lösungsvorgänge in der Mischung beschleunigt werden.

Nach dem Befüllen des Verdampfungskolbens werden die Ventile 41, 42 und 43 geschlossen. Zur Entnahme von Rückständen und/oder Resten des Ausgangsstoffes wird wie oben beschrieben zumindest in dem Verdampfungskolben 2 ein Überdruck erzeugt, der die Ausgangsstoffreste aus dem Kolben verdrängt und über die Entnahmeleitung 30 bei geöffnetem Ventil 40 dem Restebehälter 20 zuführt. In oben beschriebenem Beispiel für einen aus zwei Pulverkomponenten und einem Lösungsmittel bestehenden Ausgangsstoff kann beispielsweise das Lösungsmittel durch den Verdampfungsvorgang im Wesentlichen verdampft werden, so dass nach dem Verdampfungsvorgang im Wesentlichen eine Mischung aus den zwei Pulverkomponenten in dem Verdampfungskolben als Ausgangsstoffrest vorliegt und dem Restebehälter 20 zugeführt wird.

Das mit Bezug auf Fig. 1 beschriebene Ventil 15 der Zuführleitung 11 kann dabei weggelassen werden, da das Zudosieren und Entnehmen des Ausgangsstoffes durch die Ventile 41, 42 und 43 gesteuert wird.

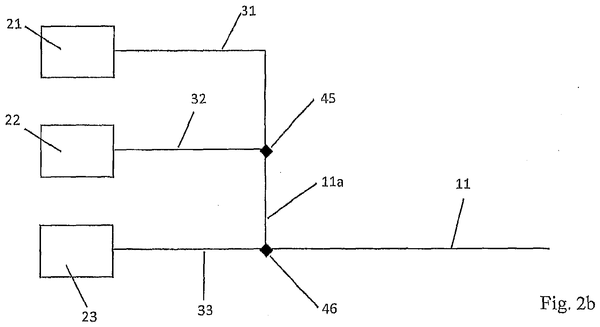

Eine Weiterbildung der Erfindung ist in Fig. 2b gezeigt. Hierbei sind die Ventile nicht wie in Fig. 2a gezeigt in den Leitungsabschnitten 41, 42 und 43 angeordnet, sondern in den Knotenpunkten, in welchen sich die Leitungen verzweigen. Die gezeigten Ventile 45 und 46 sind dabei zum Steuern der Stoffströme zwischen den Behältern 21, 22 und 23 und dem Verdampfungskolben 2 geeignet. Jedes der Ventile 45 und 46 kann beispielsweise als ein 3/2-Wege Ventil ausgeführt sein. So regelt das Ventil 46 den Stoffstrom zwischen der Zuführleitung 11 und den Leitungsabschnitten 11a und 33 und das Ventil 45 den Stoffstrom zwischen den Leitungsabschnitten 11a, 31 und 32.

Die Entnahme des Destillats kann ebenfalls komponentenweise erfolgen. Hierzu wird sich zunutze gemacht, dass verschiedene Komponenten des Ausgangsstoffes unterschiedliche Siedepunkte aufweisen. Damit ist es möglich, verschiedene Komponenten des Ausgangsstoffes zeitlich voneinander getrennt zu verdampfen, dem Sammelgefäß 6 zuzuführen und separat voneinander zu entnehmen. Zur Entnahme der einzelnen Komponenten können mehrere Destillatentnahmebehälter bereitgestellt sein, wobei jeweils ein Entnahmebehälter zur Aufnahme einer Destillatkomponente mit der Destillatleitung 12 verbunden wird.

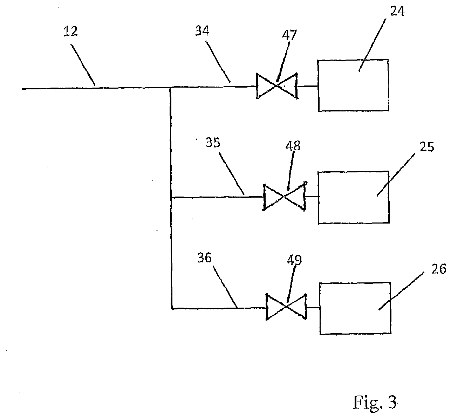

Wie in Fig. 3 gezeigt können zur separaten Entnahme auch Leitungsabschnitte 34, 35 und 36 vorgesehen sein, welche jeweils mit einem Destillatentnahmebehälter 24, 25 bzw. 26 verbunden sind. Zum koordinierten Steuern des Destillatflusses aus dem Sammelbehälter 6 in den gewünschten Entnahmebehälter 24, 25 oder 26 sind Absperreinrichtungen in Form von Ventilen 47, 48, 49 in den entsprechenden Leitungsabschnitten 34, 35 bzw. 36 vorgesehen. Das Ventil 16 in der Destillatleitung 12 kann somit weggelassen werden.

Zur Entnahme dreier verschiedener Destillatkomponenten wird eine erste Komponente durch Einstellen einer geeigneten Temperatur in dem Heizbad 3 und/oder eines geeigneten Unterdrucks in dem Verdampfungskolben 2 mittels des Kompressors 5 und/oder einer geeigneten Rotationsgeschwindigkeit mittels dem Rotationsantrieb 7 aus dem in dem Verdampfungskolben 2 enthaltenen Ausgangsstoff verdampft. Die verdampfte Komponente gelangt in den Kondensator 4, wird dort verflüssigt und gelangt in den Sammelbehälter 6. Durch Erzeugen eines Überdrucks in dem Sammelbehälter 6, beispielsweise mittels des Kompressors 5, und Öffnen des Ventils 47 wird die erste Destillatkomponente durch die Destillatleitung 12 und den Leitungsabschnitt 34 dem ersten Destillatentnahmebehälter 24 zugeführt. Anschließend wird das Ventil 47 wieder geschlossen.

Anschließend wird durch Einstellen einer geeigneten Heiztemperatur und/oder eines geeigneten Unterdrucks und/oder einer geeigneten Rotationsgeschwindigkeit eine zweite Komponente des Ausgangsstoffes verdampft, kondensiert und dem Sammelbehälter 6 zugeführt und durch Erzeugen eines Überdruckes in dem Sammelbehälter 6 und Öffnen des Ventils 48 des Leitungsabschnittes 35 diese zweite Destillatkomponente dem zweiten Destillatentnahmebehälter 25 zugeführt. Danach wird analog dazu mit einer dritten Komponente verfahren, welche dem dritten Destillatentnahmebehälter 26 zugeführt wird.

In einer Weiterbildung der Erfindung ist zumindest ein Destillatentnahmebehälter mit der Zuführleitung 11 verbunden. Damit ist es möglich, ein entnommenes Destillat bzw. eine Destillatkomponente nochmals dem Verdampfungskolben zuzuführen und einem Verdampfungsvorgang zu unterziehen. Somit ist eine Mehrfachdestillation auf einfache Art und Weise möglich.

In der oben beschriebenen Ausführungsform der Erfindung wird zur Destillatentnahme bzw. Entnahme von Ausgangsstoffresten bzw. zur Zudosierung des Ausgangsstoffes ein Über- bzw. Unterdruck in dem gesamten im Wesentlichen gasdicht abgeschlossenen aus Sammelbehälter, Verdampfungskolben und Kondensator bestehenden System erzeugt. Hierzu kann der Kompressor 5 genutzt werden und/oder eine weitere Einrichtung zum Erzeugen eines Unterdruckes und/oder Überdrucks an den Anschluss 19 des Verdampfers angeschlossen werden. Somit können an dem Rotationsverdampfer bereits vorhandene Einrichtungen zum Durchführen der Erfindung genutzt werden, ohne aufwändige Modifikationen an dem Rotationsverdampfer tätigen zu müssen. Ferner ist es jedoch auch möglich, eine separate Einrichtung zum Erzeugen eines Unterdruckes und/oder Überdruckes an dem Verdampfungskoben bzw. dem Destillatsammelbehälter anzuschließen. Hierzu weißt der entsprechende Behälter geeignete Anschlüsse auf und ist vorzugsweise durch ein in der Dampfdurchführung 18 bzw. dem Destillatauslass 28 vorgesehenen Ventil von dem gasdichten System entkoppelbar, d.h. durch Schließen des Ventils in der Dampfdurchführung 18 bzw. dem Destillatauslass 28 ist der Verdampfungskolben bzw. der Destillatsammelbehälter ein im Wesentlichen gasdicht abgeschlossener Raum, in welchem mittels der Einrichtung zum Erzeugen eines Unter- und/oder Überdruckes ein definierter Druck erzeugbar ist. Damit kann eine Destillatentnahme beispielsweise ohne Unterbrechung des Verdampfungsvorganges durchgeführt werden.

Ein automatisches Befüllen und/oder eine automatische Entnahme des Destillats bzw. von Ausgangsstoffresten ist durch koordiniertes Steuern der Ventile und der Einrichtung zum Erzeugen eines Unterdruckes und/oder Überdruckes mittels einer Steuereinrichtung möglich. Hierzu können in dem Destillatsammelbehälter und/oder dem Verdampfungskolben Sensoren vorgesehen sein, die beispielsweise einen Füllstand erfassen und mit einer Auswerteinheit des von den Sensoren erfassten Signals verbunden sind. Die Steuereinheit ist mit der Auswerteinheit verbunden und steuert die Ventile und die Einrichtung zum Erzeugen eines Unterdruckes und/oder Überdruckes in Abhängigkeit eines Sensorsignals, beispielsweise einer Füllstandhöhe. Die Steuereinheit kann auch dazu geeignet sein, den Rotationsmotor und/oder die Heizbadtemperatur und/oder den Vertikalantrieb zu steuern, so dass auch der Destillationsvorgang automatisch durchführbar ist.

Die Erfindung ist nicht auf die in Fig. 2a, 2b und 3 gezeigte Anordnung von Leitungsabschnitten und Ventilen beschränkt. Vielmehr können die Leitungsabschnitte und Ventile auch gemäß einer anderen geeigneten Anordnung angeordnet sein. Die Leitungsabschnitte können auch direkt in den Destillatsammelbehälter bzw. Verdampfungskolben geführt sein und so die Zuführleitung 11 bzw. die Destillatleitung 12 ersetzen. Insbesondere können die Ventile auch als Wegeventile, beispielsweise als 3/2-Wegeventile analog zu Fig. 2b ausgeführt sein. An den Leitungsabschnitten können zusätzlich oder anstelle der Ventile Dosiereinrichtungen zum Einstellen eines Volumenstromes angeordnet sein.

Der in Fig. 1 gezeigte Vorratsbehälter 50 und die Peristaltikpumpe 17 und Leitung 51 können auch weggelassen werden. Die zudosierte Menge an Ausgangsstoff kann dann beispielsweise über den Volumenstrom durch die Leitung 11 gesteuert werden. So kann das Ventil 15 beispielsweise nach einer vorgegebenen Zeitspanne wieder geschlossen werden und/oder das Ventil 15 kann zum Einstellen des durch die Leitung 11 geleiteten Volumenstroms geeignet sein.

In der in Fig. 2a und 2b gezeigten Ausführungsform sind jeweils drei Behälter für verschiedene Komponenten des Ausgangsstoffes vorgesehen. Die Erfindung ist jedoch nicht darauf beschränkt, vielmehr können auch mehr oder weniger als drei Behälter für Ausgangsstoffkomponenten mit geeigneten Leitungsabschnitten und Ventilen vorgesehen sein. Ebenso können zur separaten Entnahme verschiedener Destillatkomponenten, welche mit Bezug auf Fig. 3 beschrieben wurde, auch mehr oder weniger als drei Destillatentnahmebehälter vorgesehen sein. Dabei kann jede Destillatkomponente einem eigenen Entnahmebehälter zugeführt werde. Es ist jedoch auch möglich, mehrere Destillatkomponenten einem Entnahmebehälter zuzuführen oder eine Destillatkomponente auf mehrere Entnahmebehälter zu verteilen.

Der Destillatsammelbehälter kann auch weggelassen werden. In diesem Falle sammelt sich das Destillat beispielsweise in einem unteren Bereich des Kondensators, welcher unmittelbar über einen Auslass mit der Destillatleitung verbunden ist.

Der oben beschriebene Rotationsverdampfer 1 kann gemäß einer Weiterbildung der Erfindung auf einfache Art und Weise gereinigt werden. Ein entsprechend modifizierter Rotationsverdampfer und ein derartiges Verfahren zum Reinigen des Rotationsverdampfers werden im Folgenden mit Bezug auf Fig. 1 beschrieben. Zur Vereinfachung werden im Folgenden lediglich die Modifikationen des Rotationsverdampfers angegeben, gleich bleibende Komponenten und Funktionen des Rotationsverdampfers 1 werden nicht wiederholt.

Zum Reinigen des Rotationsverdampfers 1 ist die das Ventil 15 umfassende Zuführleitung 11 nicht mit dem den Ausgangsstoff enthaltenen Behälter 13 verbunden, sondern mit einem in Fig. 1 nicht gezeigten Reinigungsmittelbehälter bzw. ist der in Fig. 1 gezeigte Behälter 13 als ein Reinigungsmittelbehälter ausgebildet. Ebenso steht die das Ventil 40 umfassende Entnahmeleitung 30 mit einem Restebehälter 20 zur Aufnahme des Reinigungsmittels in Verbindung. Bei dem in Fig. 1 gezeigten Rotationsverdampfer 1 sind die Zuführleitung 11 und die Entnahmeleitung 30 jeweils durch die Durchführung 29 des Kondensators 4 in den Verdampfungskolben 2 geführt, so dass der Verdampfungskolben 2 mit den Behältern 13, 20 in Verbindung steht. Alternativ kann der Behälter 13 über die Zuführleitung 11 und/oder der Restebehälter 20 über die Entnahmeleitung 30 mit dem Kondensator 4 in Verbindung stehen. Vorzugsweise ist die Zuführleitung 11 zum Reinigen des Rotationsverdampfers 1 in einem oberen Bereich des Kondensators 4 durch eine geeignete Durchführung des Kondensators (in Fig. 1 nicht gezeigt) in den Kondensator 4 hinein geführt und steht so in Verbindung mit einem oberen Bereich des Kondensators 4.

Als Reinigungsmittel wird vorzugsweise eine Flüssigkeit verwendet, insbesondere Wasser und/oder ein im Betrieb des Rotationsverdampfers verwendeter Tiefsieder (d.h. eine leichtflüchtige bzw. niedrig siedende Komponente, welche in einem vorhergehenden Betrieb, d.h. Verdampfungsvorgang, verdampft wurde) und/oder ein gemäß der Regel *"Similia similibus solvuntur"* ("Ähnliches löst sich in Ähnlichem") gewähltes, an einen im Betrieb des Rotationsverdampfers verwendeten Ausgangsstoff oder zumindest eine Komponente des Ausgangsstoffes angepasstes Medium, und/oder ein individuell auf ein im Betrieb des Rotationsverdampfers, d.h. in einem Verdampfungsvorgang, verdampftes Medium zugeschnittenes Reinigungsmittel. Vorzugsweise ist das Reinigungsmittel also an einen im Betrieb des Rotationsverdampfers verwendeten Ausgangsstoff oder an zumindest eine Komponente, insbesondere eine im Betrieb verdampfte Komponente, des Ausgangsstoffes angepasst.

Zum Reinigen des Rotationsverdampfers 1 wird zunächst das Reinigungsmittel in den Verdampfungskolben 2 und/oder den Kondensator 4 eingebracht bzw. diesem zugeführt. Hierzu werden das Ventil 16 für die Destillatentnahme und das Ventil 40 für die Entnahme des Reinigungsmittels geschlossen, so dass die Destillatleitung 12 und die Entnahmeleitung 30 abgesperrt sind. Dann wird mittels des Kompressors 5 zumindest in dem Verdampfungskolben 2 und dem Kondensator 4 ein Unterdruck bis hin zu einem Vakuum erzeugt und das Ventil 15 der Zuführleitung 11 geöffnet. Der Unterdruck saugt das Lösungsmittel aus dem Behälter 13 durch die Zuführleitung 11 in den Verdampfungskolben 2 bzw. den Kondensator 4. Das Reinigungsmittel durchströmt den Verdampfungskolben 2 und/oder den Kondensator 4, wodurch Verunreinigungen und Rückstände von den Innenwänden des Kondensators 5, der Dampfdurchführung 18 und des Rotationskolbens 4 gelöst und in dem Reinigungsmittel aufgenommen werden. Danach wird das Ventil 15 geschlossen und riegelt so die Zuführleitung 11 ab.

Zur Entnahme des Lösungsmittels wird mittels des Kompressors 5 ein Überdruck in dem Verdampfungskolben 2 und dem Kondensator 4 erzeugt. Dann wird das Ventil 40 geöffnet, so dass das Lösungsmittel durch den Überdruck aus dem Verdampfungskolben 2 und dem Kondensator 4 verdrängt wird und durch die Entnahmeleitung 30 in den Restebehälter 20 gelangt. Der Überdruck wird dabei so lange aufrechterhalten, bis im Wesentlichen kein Reinigungsmittel mehr in dem Verdampfungskolben 2 und dem Kondensator 4 vorhanden ist.

Das Reinigen des Rotationsverdampfers erfolgt somit im Wesentlichen analog zum Befüllen des Verdampfungskolben 4 mit dem Ausgangsstoff mittels Unterdruck und der Entnahme von Resten bzw. Rückständen des Ausgangsstoffes mittels Überdruck, wie oben beschrieben, nur dass Anstelle des Ausgangsstoffes bzw. dessen Reste / Rückstände ein Reinigungsmittel verwendet wird.

Vorzugsweise ist während der Reinigung des Rotationsverdampfers 1 das Heizbad 3 ausgeschaltet. Der Rotationsantrieb 7 kann ebenfalls ausgeschaltet sein oder eingeschaltet sein, so dass der Verdampfungskolben 2 in Rotation versetz wird. Dies kann die Reinigungswirkung weiter verstärken.

Das Reinigen des Rotationsverdampfers 1 erfolgt beispielsweise nach einem oben beschriebenen Verdampfungsvorgang, insbesondere nach der Entnahme des Destillats aus dem Sammelbehälter 6 und der Entnahme von Ausgangsstoffresten aus dem Verdampfungskolben 2.

Der Rotationsverdampfer bzw. das Reinigungsverfahren können durch die oben in Bezug auf Fig. 2a, 2b und 3 beschriebenen Weiterbildungen weitergebildet sein. Insbesondere kann ein in Bezug auf Fig. 2a und/oder Fig. 2b beschriebener Behälter 21, 22, 23 das Reinigungsmittel enthalten, während ein anderer Behälter 21, 22, 23, der nicht das Reinigungsmittel enthält, den Ausgangsstoff oder zumindest eine Komponenten des Ausgangsstoffes enthalten.

## Patentansprüche

1. Rotationsverdampfer zum Verdampfen eines in einem Ausgangsstoff enthaltenen Stoffes mit einem Verdampfungskolben (2) zur Aufnahme des Ausgangsstoffes, einer Einrichtung (3) zum Erhitzen des Stoffes, einem Kondensator (4) zum Kondensieren des verdampften Stoffes, einem Sammelbehälter (6) zur Aufnahme des wiederverflüssigten Stoffes und zumindest einer Einrichtung (5) zum Erzeugen eines Unterdruckes und/oder Überdruckes, **dadurch gekennzeichnet,**
**dass** zur Entnahme des wiederverflüssigten Stoffes zumindest in dem Sammelbehälter (6) ein Überdruck herstellbar ist und/oder zur Entnahme von Rückständen des Ausgangsstoffes zumindest in dem Verdampfungskolben (2) ein Überdruck herstellbar ist, und
wobei eine erste Leitung (11) und/oder ein erster Leitungsabschnitt (31, 32, 33, 11a) zum Zudosieren des Ausgangsstoffes zumindest zeitweise mit einem Destillatentnahmebehälter (14, 24, 25, 26) verbunden ist, um ein entnommenes Destillat nochmals dem Verdampfungskolben zuzuführen und einem Verdampfungsvorgang zu unterziehen.

2. Rotationsverdampfer nach Anspruch 1, wobei zur Zudosierung des Ausgangsstoffes zumindest in dem Verdampfungskolben (2) ein Unterdruck herstellbar ist.

3. Rotationsverdampfer nach Anspruch 1 oder 2, wobei zumindest der Verdampfungskolben (2), der Kondensator (4) und der Sammelbehälter (6) ein im Wesentlichen gasdicht abgeschlossenes System bilden in welchem vorzugsweise mittels der Einrichtung (5) zum Erzeugen eines Unterdruckes und/oder Überdruckes ein Druck einstellbar ist.

4. Rotationsverdampfer nach einem der Ansprüche 1 bis 3, mit weiter einer ersten Leitung (11) zur Zudosierung des Ausgangsstoffes und/oder einer zweiten Leitung (12) zur Entnahme des wiederverflüssigten Stoffes und/oder einer dritten Leitung (30) zur Entnahme des Ausgangsstoffes, wobei die erste, zweite und dritte Leitung (11, 12, 30) eine erste bzw. eine zweite bzw. eine dritte Absperreinrichtung (15, 16, 40) aufweisen, so dass zur Zudosierung des Ausgangsstoffes die zweite und dritte Leitung (12, 30) durch die zweite bzw. dritte Absperreinrichtung (16, 40) absperrbar sind und/oder zur Entnahme des wiederverflüssigten Stoffes die erste und dritte Leitung (11, 30) durch die erste bzw. dritte Absperreinrichtung (15, 40) absperrbar sind und/oder zur Entnahme des Ausgangsstoffes die erste und zweite Leitung (11, 12) durch die erste bzw. zweite Absperreinrichtung (15, 16) absperrbar sind.

5. Rotationsverdampfer nach einem der Ansprüche 1 bis 4, wobei der Ausgangsstoff ein Stoffgemisch aus verschiedenen Komponenten ist und zur Zudosierung des Ausgangsstoffes zumindest zwei erste Leitungsabschnitte (31, 32, 33, 11a) vorgesehen sind und wobei zur Dosierung verschiedener Komponenten des Ausgangsstoffes vorzugsweise Absperreinrichtungen (41, 42, 43, 45, 46) an und/oder zwischen den Leitungsabschnitten (31, 32, 33, 11a) vorgesehene sind.

6. Rotationsverdampfer nach Anspruch 4 oder 5, wobei zumindest eine Absperreinrichtung (15, 16, 40, 41, 42, 43, 45, 46) manuell und/oder automatisch bedienbar ist und/oder wobei zumindest eine Absperreinrichtung (15, 16, 40, 41, 42, 43, 45, 46) zur Dosierung der Menge des durchströmenden Stoffes geeignet ist.

7. Rotationsverdampfer nach einem der Ansprüche 1 bis 6, wobei zumindest zwei Destillatentnahmebehälter (24, 25, 26) und/oder zumindest zwei zweite Leitungsabschnitte (34, 35, 36) vorgesehen sind zur Entnahme zumindest zwei verschiedener Komponenten des wiederverflüssigten Stoffes.

8. Rotationsverdampfer nach einem der Ansprüche 2 bis 7, weiter verbunden mit zumindest einem Vorratsbehälter (50) zum Bevorraten zumindest einer Komponente des Ausgangsstoffes und einer Dosiereinrichtung, vorzugsweise einer Peristaltikpumpe (17), zum Zuführen einer vorherbestimmten Menge der zumindest einen Komponente des Ausgangsstoffes aus dem Vorratsbehälter (50) in einen Dosierbehälter (13, 21, 22, 23).

9. Verfahren zum Verdampfen eines in einem Ausgangsstoff enthaltenen Stoffes mittels eines Rotationsverdampfers (1), wobei der Rotationsverdampfer (1) umfasst: einen Verdampfungskolben (2) zur Aufnahme des Ausgangsstoffes, eine Einrichtung (3) zum Erhitzen des Stoffes, einen Kondensator (4) zum Kondensieren des verdampften Stoffes, einen Sammelbehälter (6) zur Aufnahme des wiederverflüssigten Stoffes und zumindest eine Einrichtung (5) zum Erzeugen eines Unterdruckes und/oder Überdruckes,
wobei das Verfahren zumindest folgenden Schritt umfasst: Erzeugen eines Überdruckes zumindest in dem Sammelbehälter (6) zur Entnahme des wiederverflüssigten Stoffes und/oder Erzeugen eines Überdruckes zumindest in dem Verdampfungskolben (2) zur Entnahme von Rückständen des Ausgangsstoffes und
wobei eine erste Leitung (11) und/oder ein erster Leitungsabschnitt (31, 32, 33, 11a) zum Zudosieren des Ausgangsstoffes zumindest zeitweise mit einem Destillatentnahmebehälter (14, 24, 25, 26) verbunden ist, um ein entnommenes Destillat nochmals dem Verdampfungskolben zuzuführen und einem Verdampfungsvorgang zu unterziehen.

10. Rotationsverdampfer (1) nach einem der Ansprüche 1 bis 8 umfassend eine Steuereinheit, wobei die Steuereinheit ausgebildet und/oder programmiert ist, Absperreinrichtungen (15, 16, 40, 41, 42, 43, 45, 46, 47, 48, 49) des Rotationsverdampfers (1) und/oder die Einrichtung (5) zum Erzeugen eines Unterdruckes und/oder Überdruckes zu steuern um ein Verfahren nach Anspruch 9 durchzuführen.

## Claims

1. A rotary evaporator for evaporating a substance contained in an initial substance, the rotary evaporator having an evaporation flask (2) for receiving the initial substance, a device (3) for heating the substance, a condenser (4) for condensing the vaporized substance, a collection container (6) for receiving the re-liquefied substance and at least one device (5) for generating a low pressure and/or an excess pressure, **characterized in that**
an excess pressure can be generated at least within the collection container (6) in order to remove the re-liquefied substance and/or an excess pressure can be generated at least within the evaporation flask (2) in order to remove residues of the initial substance, and
wherein a first conduit (11) and/or a first conduit portion (31, 32, 33, 11 a) for supplying the initial substance in a metered manner is at least temporarily connected with a distillate removal container (14, 24, 25, 26) in order to supply a removed distillate again to the evaporation flask and to subject it to an evaporation process.

2. The rotary evaporator according to claim 1, wherein a low pressure can be generated at least within the evaporation flask (2) in order to supply the initial substance in a metered manner.

3. The rotary evaporator according to claim 1 or 2, wherein at least the evaporation flask (2), the condenser (4) and the collection container (6) form a substantially gas-tight sealed system in which a pressure is preferably adjustable by means of the device (5) for generating a low pressure and/or an excess pressure.

4. The rotary evaporator according to one of claims 1 to 3, further having a first conduit (11) for supplying the initial substance in a metered manner and/or a second conduit (12) for removing the re-liquefied substance and/or a third conduit (30) for removing the initial substance, wherein the first, second and third conduits (11, 12, 30) have a first, second and third shut-off device (15, 16, 40), respectively, so that the second and third conduits (12, 30) can be shut off by the second and third shut-off devices (16, 40) in order to supply the initial substance in a metered manner and/or so that the first and third conduits (11, 30) can be shut off by the first and third shut-off devices (15, 40) in order to remove the re-liquefied substance and/or so that the first and second conduits (11, 12) can be shut off by the first and second shut-off devices (15, 16) in order to remove the initial substance.

5. The rotary evaporator according to one of claims 1 to 4, wherein the initial substance is a substance mixture of different components and at least two first conduit portions (31, 32, 33, 11a) are provided for supplying the initial substance in a metered manner and wherein preferably shut-off devices (41, 42, 43, 45, 46) are provided at and/or between the conduit portions (31, 32, 33, 11a) for metering different components of the initial substance.

6. The rotary evaporator according to claim 4 or 5, wherein at least one shut-off device (15, 16, 40, 41, 42, 43, 45, 46) can be operated manually and/or automatically and/or wherein at least one shut-off device (15, 16, 40 , 41, 42, 43, 45, 46) is suitable for metering an amount of the substance flowing there through.

7. The rotary evaporator according to one of claims 1 to 6, wherein at least two distillate removal containers (24, 25, 26) and/or at least two second conduit portions (34, 35, 36) are provided for removing at least two different components of the re-liquefied substance.

8. The rotary evaporator according to one of claims 2 to 7, further being connected with at least one storage container (50) for storing at least one component of the initial substance, and a metering device, preferably a peristaltic pump (17), for supplying a predetermined amount of the at least one component of the initial substance from the storage container (50) into a metering container (13, 21, 22, 23).

9. A method for evaporating a substance contained in an initial substance using a rotary evaporator (1), the rotary evaporator (1) comprising: an evaporation flask (2) for receiving the initial substance, a device (3) for heating the substance, a condenser (4) for condensing the vaporized substance, a collection container (6) for receiving the re-liquefied substance and at least one device (5) for generating a low pressure and/or an excess pressure,
wherein the method comprises at least the following step: generating an excess pressure at least within the collection container (6) for removing the re-liquefied substance and/or generating an excess pressure at least within the evaporation flask (2) for removing residues of the initial substance and
wherein a first conduit (11) and/or a first conduit portion (31, 32, 33, 11 a) for supplying the initial substance in a metered manner is at least temporarily connected with a distillate removal container (14, 24, 25, 26) in order to supply a removed distillate again to the evaporation flask and to subject it to an evaporation process.

10. The rotary evaporator according to one of claims 1 to 8 comprising a control unit, wherein the control unit is configured and/or programmed to control shut-off devices (15, 16, 40, 41, 42, 43, 45, 46, 47, 48, 49) of the rotary evaporator (1) and/or the device (5) for generating a low pressure and/or an excess pressure in order to carry out a method according to claim 9.

## Revendications

1. Evaporateur rotatif pour évaporer une substance contenue dans une substance de départ avec un ballon d'évaporation (2) pour recevoir la substance de départ, un dispositif (3) pour réchauffer la substance, un condensateur (4) pour condenser la substance évaporée, un contenant de collecte (6) pour recevoir la substance reliquéfiée et au moins un dispositif (5) pour générer une dépression et/ou une surpression, **caractérisé en ce**
**qu'**une surpression peut être établie au moins dans le contenant de collecte (6) pour prélever la substance reliquéfiée et/ou une surpression peut être établie au moins dans le ballon d'évaporation (2) pour prélever des résidus de la substance de départ, et
dans lequel un premier conduit (11) et/ou un premier tronçon de conduit (31, 32, 33, 11a) est relié au moins temporairement à un contenant de prélèvement de distillat (14, 24, 25, 26) pour ajouter de manière dosée la substance de départ pour amener encore une fois au ballon d'évaporation un distillat prélevé et le soumettre à une opération d'évaporation.

2. Evaporateur rotatif selon la revendication 1, dans lequel une dépression peut être établie au moins dans le ballon d'évaporation (2) pour ajouter de manière dosée la substance de départ.

3. Evaporateur rotatif selon la revendication 1 ou 2, dans lequel au moins le ballon d'évaporation (2), le condensateur (4) et le contenant de collecte (6) forment un système fermé sensiblement de manière étanche aux gaz, dans lequel une pression peut être réglée de préférence au moins du dispositif (5) pour générer une dépression et/ou une surpression.

4. Evaporateur rotatif selon l'une quelconque des revendications 1 à 3, avec par ailleurs un premier conduit (11) pour ajouter de manière dosée la substance de départ et/ou un deuxième conduit (12) pour prélever la substance reliquéfiée et/ou un troisième conduit (30) pour prélever la substance de départ, dans lequel le premier, le deuxième et le troisième conduit (11, 12, 30) présentent un premier ou un deuxième ou un troisième dispositif d'arrêt (15, 16, 40) de sorte que le deuxième et le troisième conduit (12, 30) peuvent être fermés par le deuxième ou le troisième dispositif d'arrêt (16, 40) pour ajouter de manière dosée la substance de départ
et/ou le premier et le troisième conduit (11, 30) peuvent être fermés par le premier ou le troisième dispositif d'arrêt (15, 40) pour prélever la substance reliquéfiée et/ou le premier et le deuxième conduit (11, 12) peuvent être fermés par le premier ou le deuxième dispositif d'arrêt (15, 16) pour prélever la substance de départ.

5. Evaporateur rotatif selon l'une quelconque des revendications 1 à 4, dans lequel la substance de départ est un mélange de substances composé de différents composants et au moins deux premiers tronçons de conduit (31, 32, 33, 11a) sont prévus pour ajouter de manière dosée la substance de départ et dans lequel de préférence des dispositifs d'arrêt (41, 42, 43, 45, 46) sont prévus sur et/ou entre les tronçons de conduit (31, 32, 33, 11a) pour doser différents composants de la substance de départ.

6. Evaporateur rotatif selon la revendication 4 ou 5, dans lequel au moins un dispositif d'arrêt (15, 16, 40, 41, 42, 43, 45, 46) peut être utilisé manuellement et/ou automatiquement et/ou dans lequel au moins un dispositif d'arrêt (15, 16, 40, 41, 42, 43, 45, 46) est adapté pour doser la quantité de la substance circulante.

7. Evaporateur rotatif selon l'une quelconque des revendications 1 à 6, dans lequel au moins deux contenants de prélèvement de distillat (24, 25, 26) et/ou au moins deux deuxièmes tronçons de conduit (34, 35, 36) sont prévus pour prélever au moins deux différents composants de la substance reliquéfiée.

8. Evaporateur rotatif selon l'une quelconque des revendications 2 à 7, relié par ailleurs à au moins un réservoir (50) pour stocker au moins un composant de la substance de départ et un dispositif de dosage, de préférence une pompe péristaltique (17), pour amener une quantité définie au préalable de l'au moins un composant de la substance de départ du réservoir (50) dans un contenant de dosage (13, 21, 22, 23).

9. Procédé pour évaporer une substance contenue dans une substance de départ au moyen d'un évaporateur rotatif (1), dans lequel l'évaporateur rotatif (1) comprend : un ballon d'évaporation (2) pour recevoir la substance de départ, un dispositif (3) pour réchauffer la substance, un condensateur (4) pour condenser la substance évaporée, un contenant de collecte (6) pour recevoir la substance reliquéfiée et au moins un dispositif (5) pour générer une dépression et/ou une surpression,
dans lequel le procédé comprend au moins l'étape suivante : la génération d'une surpression au moins dans le contenant de collecte (6) pour prélever la substance reliquéfiée et/ou la génération d'une suppression au moins dans le ballon d'évaporation (2) pour prélever des résidus de la substance de départ, et
dans lequel un premier conduit (11) et/ou un premier tronçon de conduit (31, 32, 33, 11a) est relié au moins temporairement à un contenant de prélèvement de distillat (14, 24, 25, 26) pour ajouter de manière dosée la substance de départ pour amener encore une fois au ballon d'évaporation un distillat prélevé et le soumettre à une opération d'évaporation.

10. Evaporateur rotatif (1) selon l'une quelconque des revendications 1 à 8 comprenant une unité de commande,
dans lequel l'unité de commande est réalisée et/ou programmée pour commander des dispositifs d'arrêt (15, 16, 40, 41, 42, 43, 45, 46, 47, 48, 49) de l'évaporateur rotatif (1) et/ou le dispositif (5) pour générer une dépression et/ou une surpression pour mettre en œuvre un procédé selon la revendication 9.
